# EUROPEAN PATENT APPLICATION

(11) **EP 0 706 812 A1**
(43) Date of publication of application: **17.04.1996**
(21) Application number: 95307207.1
(22) Date of filing: 11.10.1995
(51) Int. Cl.: B01D 29/96, B01D 35/00, B01D 46/42, F42C 15/20

(54) **Filter mounting**

(30) Priority: 11.10.1994 GB 9420428
(71) Applicant: ASTEC ENVIRONMENTAL SYSTEMS LIMITED, Weston-Super-Mare, Avon BS24 9BP (GB)
(72) Inventor: Harrison, Graham Stanley, Batheaston, Bath BA1 7QZ (GB)
(74) Representative: Stuart, Ian Alexander

(57) **Abstract**

A filter unit is mountable between two clamping members (20,22) which are coupled by pivoting struts (30) at each side so that one member is longitudinally displaceable with release of the clamping. At intermediate regions the struts (30) carry guide rails (24) in which runners (28) are slidable. In the non-clamping state the runners (28) project forwardly. Lugs (36) of a filter unit can be engaged in them. The unit is pivoted to the horizontal and pushed rearwardly. The lugs slide rearwardly along the runners (28) until they reach stops. Then the runners retract into the rails (24). Finally the rails move rearwardly, causing the struts (30) to pivot so that clamping is effected. The process is reversible to remove a filter unit.

## Description

The present invention relates to filter mounting assemblies and to fume cupboards including such assemblies. A fume cupboard includes a duct through which air is withdrawn from the cupboard space. The air is subsequently discharged. Certainly if it is discharged back into the working environment, and desirably if it is discharged into the external atmosphere, it should first be filtered to remove contaminants.

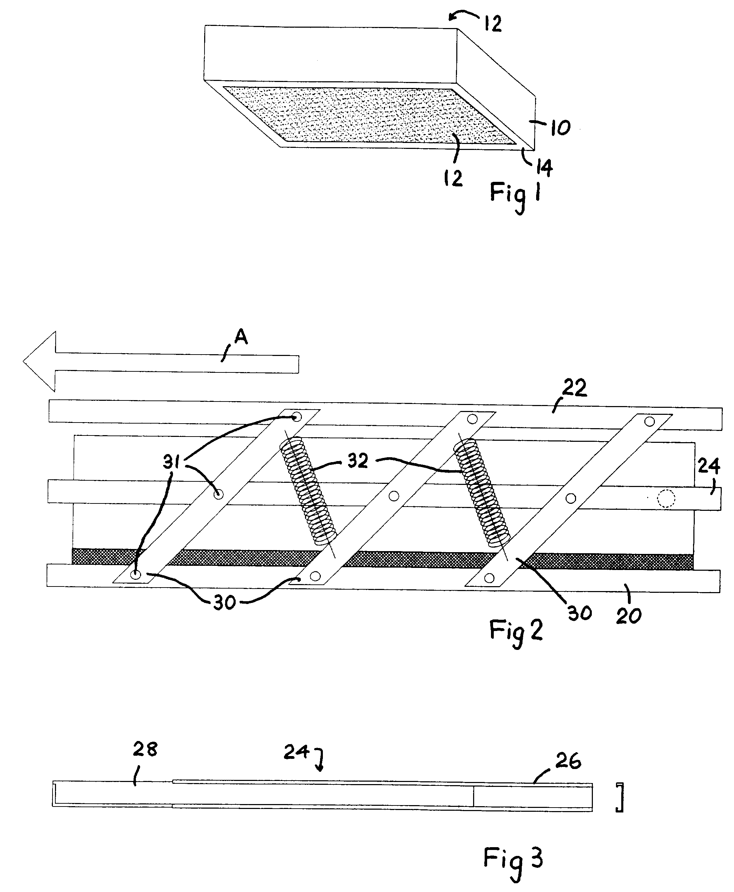

By far the most common filter medium is activated charcoal. This can be used across a wide spectrum of chemicals, from alkalis to acids, and from hydrocarbon solvents to formalin-based disinfectant liquids and their evaporating, gaseous components. After a period of use, a filter will become saturated and need replacement. Since it may contain concentrated harmful materials, it is desirable to be able to effect this with minimal handling. A typical carbon filter 8 is shown, diagrammatically, in Fig 1. A tubular plastic box 10 of rectangular section contains a filter medium (eg carbon), retained by upper and lower permeable membranes 12, typically of acid-resistant fleece. In use, the filter is installed in a gas flow path so that the gas flow passes through it. In order for the carbon filter to be effective, there must be a gas-tight seal between the outside edge of the lower face 14 of the filter and the fume cupboard working area. Thus, when a fan above the filter creates a pressure difference across it, with the upper surface at a lower pressure than the lower surface, the only route that the air can take is through the filter.

Because of the requirement for an effective seal, it is normal for the filter to be clamped into position, usually by means of a set of circular cams, eccentrically mounted on cam bars with radial actuator levers.

Carbon filters can hold up to 50% of their own weight of chemicals, but will eventually saturate and need to be replaced. The task of changing filters is normally carried out by the equipment user, rather than the representatives of the fume cupboard manufacturer. When a saturated filter is removed from a fume cupboard, it represents a health hazard for the person carrying out the removal, since the very chemicals from which the user needed protection are now present in concentrated form on the membranes which cover the top and bottom of the filter.

There is a need, therefore, to simplify the task of changing filters and to make it a safer operation.

Thus in a first aspect the invention provides a filter mounting assembly having at least one, and preferably both, of the following features:
a) a clamping assembly having parallel top and bottom clamping members, between which a filter is clamped in use, the top and bottom members being coupled together by a plurality of parallel struts pivoted to both members, so that the top member is movable relative to the bottom member while remaining parallel. Usually one of the members (generally the bottom one but possibly the top one) is fixed and the other is movable. Preferably the movable member is resiliently urged to pivot towards the other member.
b) a pair of side rails to which a filter is slidably and detachably connectable, usually via longitudinally slidable runners. Preferably there are runners which allow longitudinal displacement of a connected filter. Preferably the arrangement is such as to allow pivoting of a connected filter on the runner.

In an assembly having both of features (a) and (b), the side rails are preferably intermediate the top and bottom members. The rails are preferably pivotally connected to the struts.

Thus, in a preferred embodiment, for removal of a filter it is moved outwardly. The struts pivot, so that the clamping members move apart to release their clamping. Further outward movement of the filter is permitted by sliding of the runners in the rails, and sliding of the filter in the runners. When the filter is free of it can be pivoted so as to hang down. It can then be covered with a bag, and removed.

An embodiment of the invention will now be described in more detail with reference to the accompanying drawings in which:
Fig 1 is a schematic perspective view of a conventional carbon filter unit;
Fig 2 is a side elevation of a mounting assembly embodying the invention; and
Fig 3 is a detail of a side runner of the assembly.

Fig 2 shows, diagrammatically, the side elevation of the filter mounting assembly. A bottom clamping member 20 is fixed to the fume cupboard filter box and consists of a rectangular plate with a rectangular hole corresponding in area to that of the lower, gas-permeable surface of the carbon filter. A top clamping member 22 is a plate similar to the bottom member 20. A pair of side guides 24 each consist of a rail 26 in which a runner 28 is mounted for longitudinal sliding. The top member 22 and side guides 24 are connected to the lower plate by a number (in this example, three at each lateral side) of struts 30. Each strut is pivotally connected to the top and bottom members and to a rail. Springs 32 link these struts together so as to act to compress the whole assembly.

It can be seen that, if the top plate is moved in the direction of arrow A, the springs will expand and the overall height of the assembly will increase, as will the distance between the bottom plate and the side guide, and that between the side guides and the top plate. The top plate 22 and side guides 24 therefore remain parallel with the bottom plate, regardless of their movement in direction A.

One side guide 24 is shown, diagrammatically, in Fig 3. The purpose of the side guides is to locate the filter as it is loaded and unloaded into the head. They each have two parts, a runner 28 which can slide inside a rail 26. The movement of the runners 28 is limited by stops which prevent their complete withdrawal forwardly (direction A) and limit their rearward travel.

The method of loading the filter into the clamp is as follows.

The top plate 22 is moved in direction A by means of a hand-operated mechanism mounted on the fume cupboard filter-box, with the side runners 28 extended fully forward. The filter 8 is fitted with two circular lugs 36 shown in hidden detail in Fig 2. The runners 28 provide tracks in which the lugs are engageable. The lugs can move in the tracks longitudinally relative to the runners, to a rear position where they abut stops.

The filter 8 is first hung vertically on the side runners by locating the lugs 36 in the tracks. The filter is then lifted to a horizontal position and pushed rearwardly, while being held away from both the top and bottom plates.

Initially the movement is taken up by the lugs sliding along the tracks of the runners 28. When the lugs abut the rear stops, further movement causes the runners 28 to retract into the rails 26. With the filter now nearly in its correct position, the top plate is allowed to move back in the direction opposite to arrow A, and the springs pull the top and bottom plates together, clamping the filter in place, compressing the seal, and thus providing an air tight area around the filter.

The filter is also fitted with a handle at its front end. To remove the filter, the clamp is first released (ie the top plate is moved in direction A), and the filter is pulled towards the operator until an end stop is reached. The filter can then be lowered until it hangs from its lugs 36, free of the fume cupboard. It can then be covered by pulling a disposal bag onto it from below, and then lifted off, free of the fume cupboard, ready to be replaced by a new filter as described above.

## Claims

1. A filter mounting assembly having an upper clamping member (22) and a lower clamping member (20) between which a filter unit (10) is clampable for use, and a plurality of struts (30) pivotably connected to both of the clamping members (20,22) so that the members (20,22) are maintained in parallel and are mutually relatively displaceable, with pivoting of the struts (30), between a clamping configuration in which they are relatively closely spaced vertically and a release configuration in which their vertical spacing is greater.

2. A filter mounting assembly according to claim 1 having a plurality of struts (30) at each side of the assembly and a pair of side rails (24) each mounted to the struts intermediate the clamping members at a respective side of the assembly, the rails (24) being adapted for connection to a filter unit (10) so that the unit is displaceable in the longitudinal direction of the rails.

3. A filter mounting assembly having an upper clamping member (22) and a lower clamping member (20) between which a filter unit is clampable for use, said members (20,22) being mutually relatively displaceable between a clamping configuration in which they are relatively closely spaced vertically and a release configuration in which their vertical spacing is greater; and a pair of side rails (24) mounted at respective sides of the assembly, the rails (24) being adapted for connection to a filter unit (10) so that the unit (10) is displaceable in the longitudinal direction of the rails (24) from a position between the clamping members (20,22) to a position in which it is no longer between the members (20,22) and can be detached.

4. A filter mounting assembly according to claim 2 or 3 wherein each rail (24) has an elongate runner (28) which is longitudinally slidable relative to it, the runners (28) being adapted for connection to a filter unit (10) so that the unit (10) is displaceable in the longitudinal direction of the rails (24) (a) by displacement along the runners (28); and (b) by displacement of the runners relative to the rails (24).

5. A filter mounting assembly according to any preceding claim wherein the clamping members (20,22) are resiliently urged (32) towards the clamping configuration.

6. A filter assembly comprising a filter mounting assembly (20-36) according to any preceding claim and a filter unit (10) clamped between the clamping members thereof.

7. A fume cupboard assembly comprising a fume cupboard; a gas exit duct leading from the cupboard; a pump for drawing gas through the duct; and a filter mounting assembly (20-36) according to any of claims 1-5 located in or constituting part of the duct so that when a filter unit (10) is located therein, gas drawn through the duct must pass through it.
